# EUROPEAN PATENT APPLICATION

(11) **EP 4 664 686 A1**
(43) Date of publication of application: **17.12.2025**
(21) Application number: 25181688.0
(22) Date of filing: 10.06.2025
(51) Int. Cl.: H01R 4/46, H01R 4/70

(54) **CONNECTOR SYSTEM FOR CONDUCTORS**

(30) Priority: 10.06.2024 US 202463658042 P
(71) Applicant: Erico International Corporation, Solon, OH 44139 (US)
(72) Inventor: Gaillard, Guillaume, Sury le Comital (FR); Godard, Pascal, St. Georges Haute Ville (FR); Bizet, Frederic, Chatillon d'Azergues (FR)
(74) Representative: Barker Brettell LLP

(57) **Abstract**

A connector assembly (300) for conductors (104, 108) can include a base body (332), a cap body (336), and side walls (340). The base body can include a first clamp surface (334). The cap body can include a second clamp surface (338). The side walls can extend between the base body and the cap body. The side walls, the base body, and the cap body can define a connector passage (342) to receive a first conductor (104) and a second conductor (108) to secure the first and second conductors within the connector passage. The base body can be secured to the cap body by fasteners (186) that extend along the side walls.

## Description

### CROSS-REFERENCE TO RELATED APPLICATIONS

This application claims priority to U.S. Provisional Patent Application No. 63/658,042, filed June 10, 2024.

### BACKGROUND

In some electrical grids, high-to-low voltage transformers or other electrical modules can supply power to power distribution modules, which may distribute the power to individual power taps or access points. For example, a transformer can be linked to a power distribution module (e.g., cabinet) that supplies power to the lights, outlets, and any other electronic devices in a residential home or a commercial space. It may be useful to electrically connect conductors in these and other contexts.

### SUMMARY

Some examples of the disclosed technology can include a connector assembly for conductors. A base body can include a first clamp surface. A cap body can include a second clamp surface. Side walls can extend between the base body and the cap body. The side walls, the base body, and the cap body can define a connector passage to receive a first conductor (e.g., in a first direction) and a second conductor (e.g., in a second direction) to secure the first and second conductors within the connector passage. The base body can be secured to the cap body by fasteners that extend along the side walls.

In some examples a connector assembly for conductors can include a base body that includes a first base side portion, a second base side portion, and a first clamp surface with first clamping teeth between the first base side portion and second base side portions. A cap body can include a first cap side portion, a second cap side portion, and a second clamp surface with second clamping teeth between the first cap side portion and the second cap side portions. A first side wall can extend from the first base side portion toward the cap body. A second side wall can extend from the second base side portion toward the cap body. The first side wall, the second side wall, the base body, and the cap body can collectively define a connector passage to receive a first conductor and a second conductor along an insertion direction. The base body and the cap body can clamp the first and second conductors within the connector passage, between the base body and the cap body, with the connector passage defined by the base body secured to the cap body and the side walls secured between the base body and the cap body.

An insulating housing can be provided. The insulating housing can include a first housing part that includes a first entry for the first conductor. The insulating housing can include a second entry for the second conductor and can be secured to the first housing part to surround the base body, the cap body, and the first and second side walls;

The first entry and the second entry can be offset from each other, transverse to the insertion direction.

The first side wall can be seated on the first base side portion and can extend in a clamping direction toward the first cap side portion. The second side wall can be seated on the second base side portion and can extend in the clamping direction toward the second cap side portion. Along the clamping direction: the second clamp surface can overlap with the first and second side walls, the first side wall can be spaced apart from the first cap side portion, and the second side wall can be spaced apart from the second cap side portion.

Fasteners can extend through the first and second side walls, from the base body to the cap body, to secure the base body to the cap body.

The base body can include a first array of teeth that protrude toward the cap body, including a first tooth. The cap body can include a second array of teeth that protrude toward the base body, including a second tooth that can be adjacent to the first tooth along the insertion direction. A first protruding surface of the first tooth can be configured to engage a first side of the first conductor and can face toward the second tooth. A second protruding surface of the second tooth can be configured to engage a second side of the second conductor, can face toward the first tooth, and can be not parallel to the first protruding surface.

In some examples a connector assembly for conductors can include a base body that can include a first clamp surface, a cap body that can include a second clamp surface, and side walls extending between the base body and the cap body. The side walls, the base body, and the cap body can define a connector passage to receive a first conductor and a second conductor within the connector passage. Fasteners can extend along the side walls to clamp the first and second conductors within the connector passage between the base body and the cap body, the fasteners securing the base body to the cap body and securing the side walls between the base body and the cap body.

The side walls can define fastener passages and the fasteners extend within the fastener passages, internal to the side walls, between the base body and the cap body.

The base body or the cap body can include threaded bores that can receive the fasteners to secure the base body to the cap body.

The cap body can include a protruding portion that projects past the side walls into the connector passage to clamp the first and second conductors.

An insulating housing that can include: a first housing part that can include a first entry for the first conductor; and a second housing part that can include a second entry for the second conductor and can be securable to the first housing part so that the first and second housing parts fully enclose the base body, the cap body, and the side walls, except at the first and second entries.

A first end of the first housing part opposite the first entry can be nested within a second end of the second housing part opposite the second entry.

One or more of the first housing part or the second housing part can include an exterior circumferential rib adjacent to, respectively, the first end or the second end.

The connector passage can define an insertion direction and the first entry and the second entry can be offset from each other, transverse to the insertion direction.

The base body can include a first array of teeth that protrude toward the cap body. The cap body can include a second array of teeth that protrude toward the base body.

The first array of teeth can be integrally formed with the base body and the second array of teeth can be integrally formed with the cap body.

A first tooth of the first array can be adjacent to a second tooth of the second array relative to an insertion direction of the first conductor into the connector passage. A first protruding surface of the first tooth can be configured to engage a first side of the first conductor and can face toward the second tooth, and a second protruding surface of the second tooth can be configured to engage a second side of the second conductor and can face toward the first tooth. In some examples, the first protruding surface can be not parallel to the second protruding surface.

In some examples, a method of connecting conductors can include providing a connector assembly that can include: a base body that can include a first clamp surface, a cap body that can include a second clamp surface, and side walls extending between the base body and the cap body. A first conductor and a second conductor can be inserted into a connector passage defined by the side walls, the base body, and the cap body to secure the first and second conductors within the connector passage. Fasteners that extend along the side walls can be secured to clamp the first and second conductors within the connector passage between the base body and the cap body, with the fasteners securing the base body to the cap body and securing the side walls between the base body and the cap body.

The base body can include a first base side portion and a second base side portion, with the first clamp surface extending between the first and second base side portions. The cap body can include a first cap side portion and a second cap side portion, with the second clamp surface extending between the first and second cap side portions. Securing the side walls between the base body can include securing a first side wall of the side walls to be seated on the first base side portion and securing a second side wall of the side walls to be seated on the second base side portion.

The first and second conductors can be clamped within the connector passage with the first side wall spaced apart from the first cap side portion along a clamping direction defined by the fasteners, and with the second side wall spaced apart from the second cap side portion along the clamping direction.

The first and second conductors can be clamped with a first protruding surface of a first tooth on the first clamp surface and a second protruding surface of a second tooth on the second clamp surface that can be adjacent to the first tooth along an insertion direction of the connector passage. The first and second protruding surfaces can face each other and can be non-parallel with each other.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with the connector assembly may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate examples of the disclosed technology and, together with the description, serve to explain the principles of examples of the disclosed technology:
FIGS. 1A and 1B (i.e., "FIGS. 1") are axonometric and mid-plane cross-sectional view of an example connector assembly according to the disclosed technology, with conductors rendered transparently in FIG. 1B;
FIG. 1C is a mid-plane cross-sectional view of an alternate configuration of the example connector assembly of FIGS. 1.
FIG. 2 is an axonometric, exploded view of the connector assembly of the connector assembly of FIGS. 1;
FIG. 3 is an axonometric, exploded view of conductor supports of the connector assembly of FIGS. 1;
FIG. 4 is a side elevation view of the conductor supports of FIG. 3 in an assembled configuration;
FIGS. 5A and 5B are axonometric views of a connector of the connector assembly of FIGS. 1, including two sets of the conductor supports of FIG. 3, in an expanded (e.g., insertion) configuration and a compressed (e.g., clamping) configuration, respectively;
FIG. 6 is a detail view of the cross-section of FIG. 1B, with conductors not shown for clarity of presentation;
FIG. 7 is an axonometric, exploded view of another example of a connector assembly according to the disclosed technology;
FIG. 8 is an axonometric view of a base body and a cap body of a connector of the connector assembly of FIG. 7; and
FIG. 9A is a cross-sectional view of the connector assembly of FIG. 7, as assembled, taken along line IX-IX of FIG. 7;
FIG. 9B is a detail view of FIG. 9A.
FIG. 10 is a schematic view of an alternative arrangement of the base body, the cap body, and side walls of the connector assembly of FIG. 7; and
FIG. 11 shows schematic views of example conductor arrays to be secured with connector assemblies according to the disclosed technology.

### DETAILED DESCRIPTION

Before any examples of the disclosed technology are explained in detail, it is to be understood that the disclosed technology is not limited in its application to the details of construction and the arrangement of components set forth in the following description or illustrated in the following drawings. The disclosed technology is capable of other implementations and of being practiced or of being carried out in various ways.

The following discussion is presented to enable a person skilled in the art to make and use examples of the disclosed technology. Various modifications to the illustrated examples will be readily apparent to those skilled in the art, and the generic principles herein can be applied to other examples and applications without departing from examples of the disclosed technology. Thus, the disclosed technology is not intended to be limited to examples shown, but is to be accorded the widest scope consistent with the principles and features disclosed herein. The following detailed description is to be read with reference to the figures, in which like elements in different figures have like reference numerals. The figures, which are not necessarily to scale, depict selected examples and are not intended to limit the scope of examples of the disclosed technology. Skilled artisans will recognize the examples provided herein have many useful alternatives and fall within the scope of examples of the disclosed technology.

As noted above, in some contexts, it may be useful to electrically link a to a power distribution module (e.g., breaker) or otherwise provide for transmission of electrical power between different electrical modules (e.g., between known types of equipment or enclosures). Examples of the disclosed technology can be useful for this purpose, and others.

Some implementations of the disclosed technology may include connector assemblies to secure one or more conductor(s) together or to another component, with secure mechanical engagement and robust electrical continuity. Some examples in particular can be configured as splice assemblies that can securely connect together conductors in series (or parallel) along a power transmission path. For example, conductors can be connected between transformers and breakers, but installation and organization may become increasingly cumbersome as the distance spanned by the conductors increases, with corresponding increase in weight and length of the conductors. Correspondingly, there is a need for improved conductor-to-conductor connectors to enable piecewise assembly of larger electrical systems (e.g., with corresponding reduction of weight of any given conductor in a larger assembly along a transmission path, or correspondingly better organization of multiple conductors in an assembly).

Examples of the disclosed technology provide a splice (or other connector) assembly that can enable reliable connection between conductors in a variety of contexts. Some examples can in particular help to secure conductors with oblong cross-sections (e.g., conductors formed from braided wires or with otherwise generally rectangular cross sectional profiles).

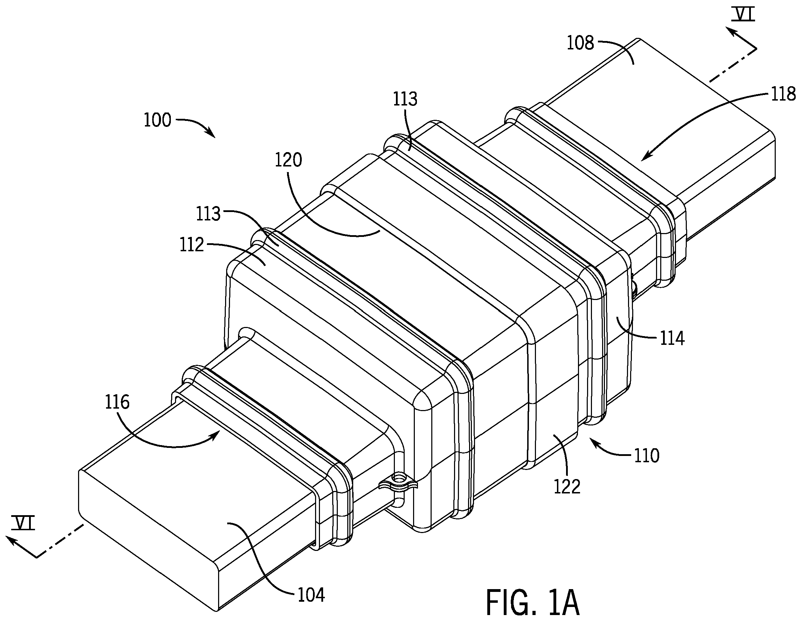

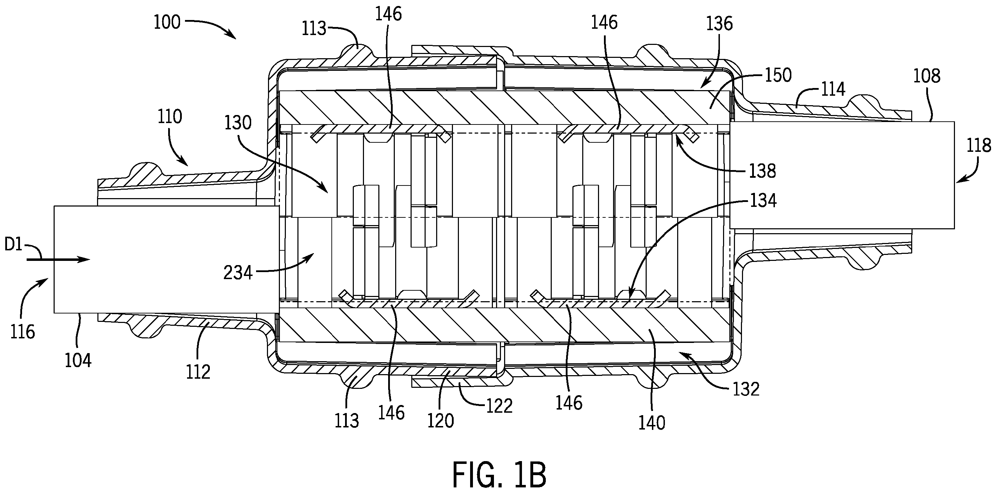

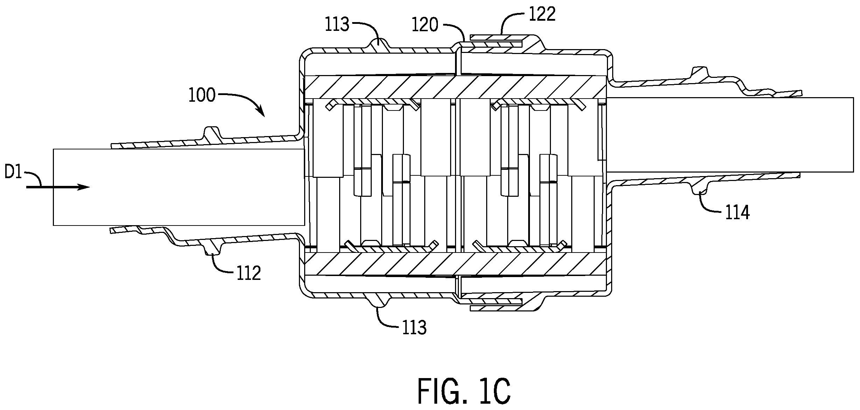

FIGS. 1 illustrates an example configuration of a connector assembly 100 configured to connect a first conductor 104 and a second conductor 108. Although the conductors 104, 108 are shown as rectangular conductors (i.e., having a rectangular cross-section), conductors or other oblong (or non-oblong) cross-sectional profiles are possible. Generally, connector assemblies according to the disclosure can include a clamp assembly (e.g., with a base body and cap body) that mechanically and electrically connects multiple conductors and that is enclosed by a housing around the connection area.

In some cases, a multi-piece housing can be provided. For example, as shown in FIGS. 1, the connector assembly 100 includes an insulating housing 110 (e.g., formed from plastic or other appropriately non-conductive material, at least in part). The insulating housing 110 includes a first housing part 112 and a second housing part 114 that is removably coupled to the first housing part 112 in a closed configuration of the insulating housing 110 (as illustrated in FIGS. 1). In particular, the first housing part 112 is securable to the second housing part 114 so that the first and second housing parts 112, 114 fully enclose bare (or insulated) portions of internal electrical components other than where the conductors 104, 108 pass out of the housing 110 (e.g., which may be taped or otherwise arranged to prevent inadvertent access/entry). As further discussed below, the housing 110 may thus protect areas of the conductors 104, 108 from which insulation has been removed for electrical connection therebetween, as well as structures that mechanically and electrically couple the first and second conductors 104, 108 together.

In the illustrated configuration, the first housing part 112 includes a first entry 116 for the first conductor 104 and the second housing part 114 includes a second entry 118 for the second conductor 108. Opposite of the first entry 116, the first housing part 112 may include an insertion end 120 and opposite of the second entry 118, the second housing part 114 may include a receiving end 122. As shown in FIG. 1B, the receiving end 122 can receive a portion of the insertion end 120 to connect together the housing parts 112, 114 and appropriately enclose the relevant internal assembly (e.g., bare, electrically and mechanically connected ends of the conductors 104, 108, as shown). In some examples, as shown in FIG. 1C, the receiving end 122 can provide a doubled lip, and corresponding blind-end channel that receives a portion of the insertion end 120. This nested engagement can further improve sealing against ingress of liquids or other contaminants in some cases.

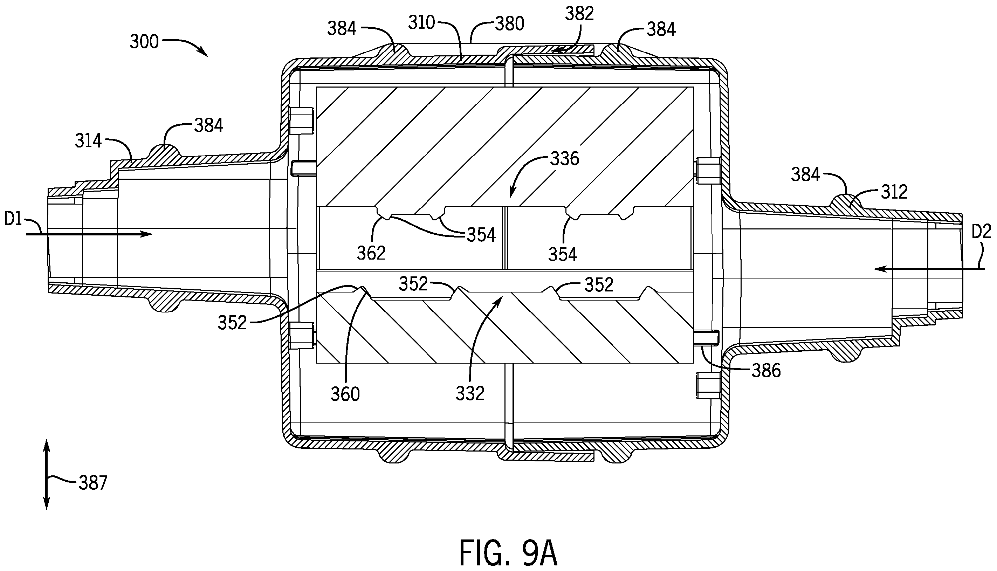

In some examples, tape or other coating, or various types of known fasteners (e.g., plastic clips, ties, etc.) can be used to help secure or seal the housing parts 112, 114 relative to each other or relative to the corresponding conductor(s) 104, 108. In this regard, one or more of the first housing part 112 or the second housing part 114 can include an exterior circumferential rib 113 adjacent to, respectively the insertion end 120 and the receiving end 122. The ribs 113 or other protrusions on the housing parts 112, 114 (e.g., as discussed relative to FIG. 9A) can help to retain insulating or sealing tape at the various seams between the housing parts 112, 114 and between the housing parts 112, 114 and the conductors 104, 108.

Referring in particular to FIG. 1B, a connector 130 can be configured secure conductors together within the housing parts 112, 114. In the illustrated example, the connector 130 includes a base body 132 that includes a first clamp surface 134, and a cap body 136 that defines a second clamp surface 138. As further detailed below, the base body 132 and the cap body 136 can thus be secured together, to mechanically clamp conductors between the first and second clamp surfaces 134, 138 and thereby secure the conductors in electrical connection with each other (and with the clamp surfaces 134, 138).

Usefully, in some examples, the entries 116, 118 of the housing 110 can be offset from each other, transverse to an insertion direction D1. Accordingly, conductors received through the entries 116, 118 may also be similarly offset and can thus be oriented to be easily clamped in an overlapped configuration (e.g., as shown in FIG. 1B). In some examples, the housing parts 112, 114 can nonetheless be formed as substantially identical parts. For example, with the entries 116, 118 formed as similarly offset features on substantially identical parts, rotation of one of the parts by 180 degrees can align the entry 118 to be offset apart from (rather than aligned with) the entry 116. In this regard, for example, the receiving end 122 simply removed (e.g., cut) from the housing part 112 (not shown attached herein) before installation as needed.

In some examples, a clamp surface can be defined by a conductor support that is secured to a separate portion of the base body 132 or the cap body 136. For example, as shown in FIG. 1B, multiple conductor supports 146 are secured to each of the base body 132 and the cap body 136. The conductor supports 146 can thus collectively define at least part of the clamp surfaces 134, 138. In some examples, conductors supports can also provide side walls for the connector 130, as further discussed below.

In the illustrated example, the conductor supports 146 are substantially identical to each other and are assembled together onto a single, multi-support connector 130. In some examples, however, other configurations are possible, including with differently configured (or numbered) conductor supports or differently configured or numbered connectors (e.g., to accommodate extended length of conductors within a housing).

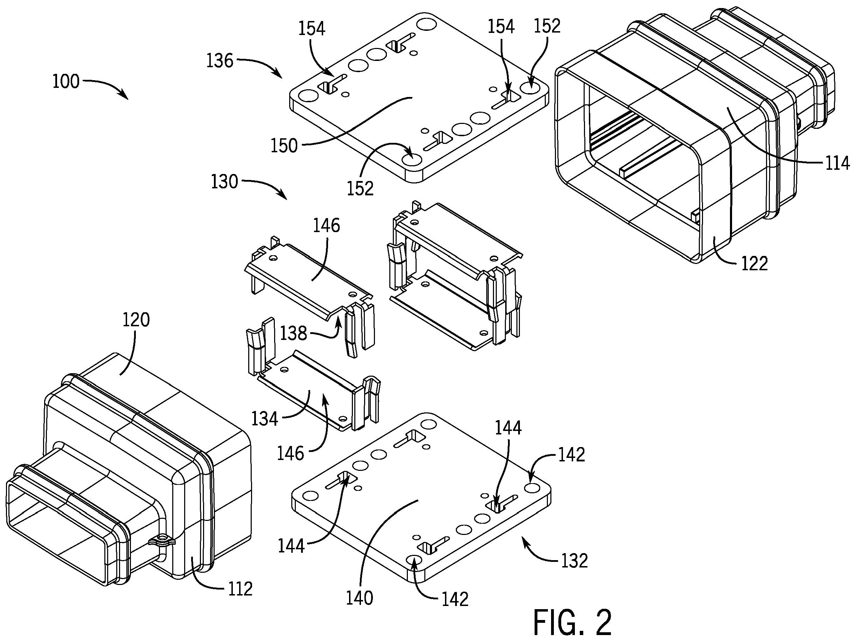

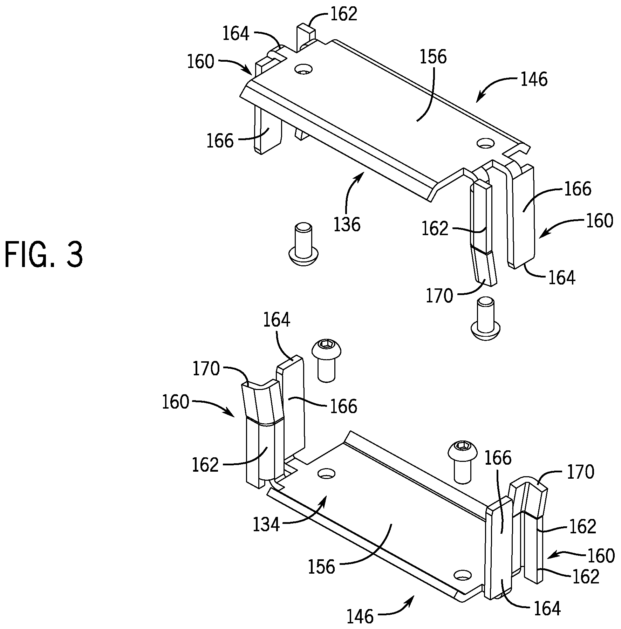

As shown in FIG. 2 in particular, the base body 132 of the connector 130 includes a base plate 140 having first fastener passages 142 and first support openings 144. Similarly, the cap body 136 includes a cap plate 150 having second fastener passages 152 and second support openings 154 (e.g., with the cap plate 150 substantially identical to the base plate 140, with a 180-degree rotational offset). As also shown in FIG. 1B, two of the conductor supports 146 (or other numbers thereof) can be secured to the base plate 140 (e.g., by screws shown in FIG. 3). Similarly, two of the conductor supports 146 (or other numbers thereof) can be secured to the cap plate 150 (e.g., by screws shown in FIG. 3).

In some examples, one or more of the fastener passages may be threaded to receive a threaded fastener. In some examples, one or more of the fastener passages may be unthreaded for sliding passage of a fastener (e.g., an internally threaded sleeve to receive an externally threaded fastener). In some examples, one or more of the support openings may exhibit a profiled cross-section (e.g., T-shaped, as shown in FIG. 2) to receive correspondingly shaped bodies.

In some examples, substantially identical conductor supports can be arranged together to provide a clamp sub-assembly. Referring now to FIG. 3, for example, substantially identical instances of the illustrated conductor support 146 can be aligned, with 180-degree rotational offset, to receive and then clamp a set of conductors (not shown in FIG. 3).

In the illustrated example, the first conductor support 146 includes opposed sets of legs 160 extending away from a base 156 of the support 146 (e.g., so as to extend perpendicularly from the base plate 140). In the illustrated example, the two sets of legs 160 shown are substantially identical to each other (with 180-degree rotational offset). However, various other configurations are possible.

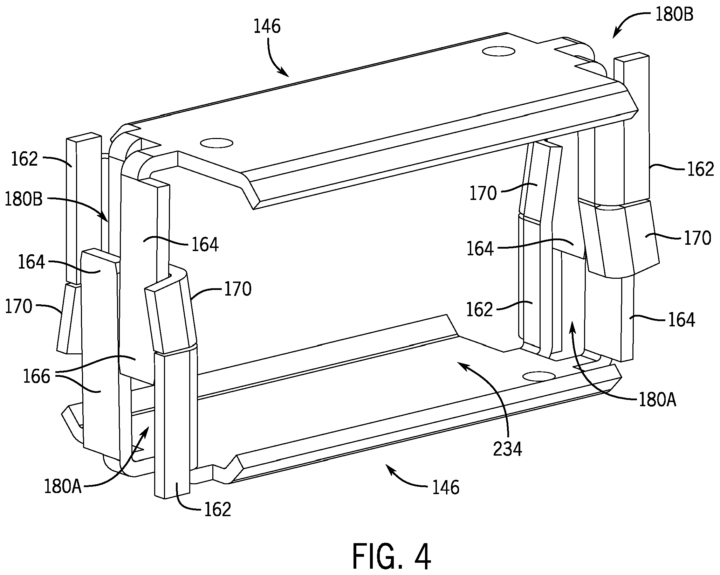

As illustrated in FIGS. 3 and 4, each of the sets of legs 160 includes a deflection leg 162 and a brace leg 164. In the illustrated example, the brace leg 164 includes a laterally widened brace plate 166 extending between lateral walls, and the deflection legs 162 include a flared (e.g., angled or curved) free end 170. For example, the free ends 170 can flare away from a splice passage 234 (generally, a connector passage) for conductors that extends between the opposed sets of the legs 160 along the corresponding clamp surface, or can flare toward the adjacent brace leg 164.

Thus configured, the conductor supports 146 can be aligned with inverted relative orientations to be connected together and thereby secure conductors between the first and second clamp surfaces 134, 138. For example, FIG. 4 illustrates the conductor supports 146 aligned in an example installed configuration (e.g., to receive or secure the conductors 104, 108 together). As shown, the brace legs 164 of the upper (as shown) support 146 are received by gaps 180A between the brace legs 164 and the corresponding deflection legs 162 of the lower (as shown) support 146. Similarly, the brace legs 164 of the lower support 146 are received by gaps 180B between the brace legs 164 and the corresponding deflection legs 162 of the upper support 146. Correspondingly, contact between the various legs of the opposed supports 146 can provide lateral alignment and stability for the inter-engagement of the supports 146.

For example, as shown in FIG. 4, edge walls of adjacent sets of the brace legs 164 of the lower and upper supports 146 can abut with each other to provide stability along a lateral direction (e.g., in parallel with pull-out forces on conductors received between the supports 146, as shown for the abutting engagement of the brace plates 166). Furthermore, in an expanded configuration as shown, the free ends 170 of the deflection legs 164 can resiliently bear against brace legs (e.g., against edge walls of the brace plates 166, with a biased interference engagement). Thus, for example, the overlapping alignment of the legs 160 from upper and lower supports 146 can collectively define opposing side walls for the connector 130, and in particular provide resilient local lateral stability as well as prevent excessive outward deformation of a clamped conductor.

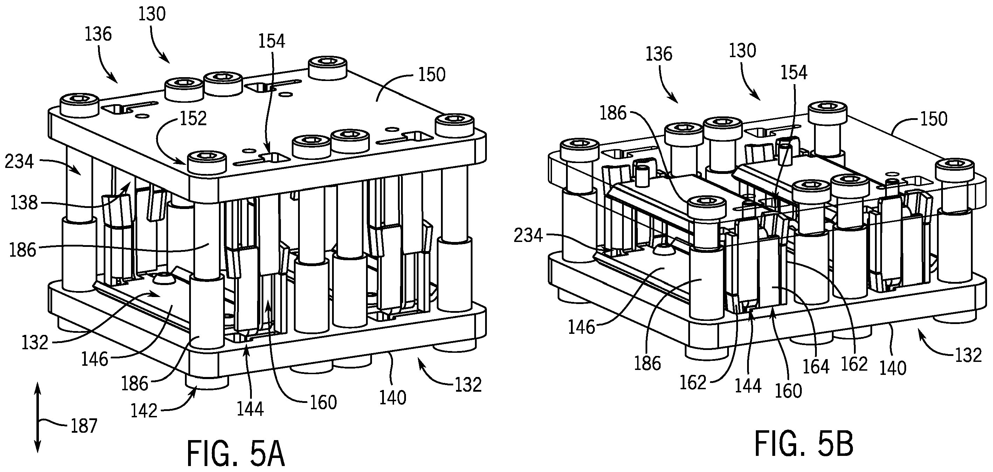

Referring to FIG. 5A and 5B, threaded fasteners 186 can be received through the fastener passages 142, 152 and tightened to move the base body 132 and the cap body 136 closer together (i.e., to move the bodies 132, 136, individually or collectively, to reduce a distance between the clamp surfaces 134, 138). Thus, one or more conductors (see, e.g., FIGS. 1) can be secured via clamping engagement with the clamp surfaces 134, 138. In the example shown, the fasteners 186 include threaded sleeves received through the base plate 140 and end-threaded bolts received through the cap plate 150. In other examples, however, various other arrangements can be used for threaded (or other) application of forces to move or hold the base and cap bodies 132, 136 together.

Specifically referring to FIG. 5A, a clamping direction along axis 187 is defined by the fasteners 186. In a first (e.g., expanded) configuration relative to the axis 187, the various legs 160 overlap in the clamping direction to provide side walls for the splice passage 234 of the connector 130 (as also bounded by the fasteners 186 and the plates 140, 150, as shown). Thus, one or more relatively large conductors (or conductor arrays) can be easily received into the passage 234 between the clamp surfaces 134, 138. Once received into the splice passage 234, the conductors (or conductor arrays) can then be secured therein by moving the bodies 132, 136 in a corresponding clamping direction to bring the clamp surfaces 134, 138 closer together along the axis 187 (e.g., with relative upward or downward movement of the body 132 or the body 136, as shown).

Referring now to FIG. 5B, the fasteners 186 have been tightened to move the base plate 140 and the cap plate 150 closer together (i.e., to be spaced apart by a smaller height than in FIG. 5A). In this second (e.g., clamped) configuration, the brace legs 164 and the deflection legs 162 the various conductor supports 146 are received by corresponding support openings 144, 154 of the opposed cap plate 150 or base plate 140. Thus, in particular, the legs 160 can extend with sufficient respective lengths to inter-engage with legs on an opposing one of the bodies 132, 136 in a relatively wide expanded configuration (e.g., as shown in FIG. 5A), while also permitting adjustment to a clamping configuration with relatively small spacing between the plates 140, 150 (e.g., as shown in FIG. 5B).

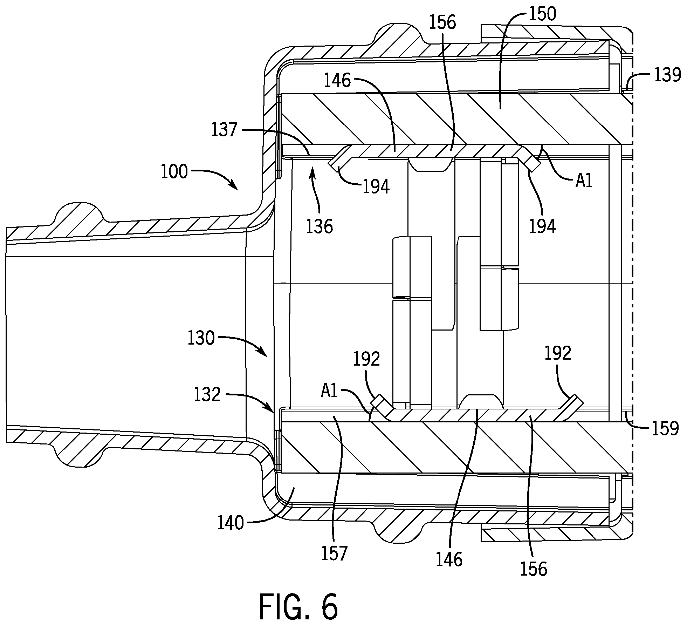

As shown in the enlarge view of FIG. 6, angled lips that extend from the bases 156 of the supports 146 can provide an array of teeth 192 on the base body 132 between a first base side portion 157 and a second base side portion 159 and an array of teeth 194 on the cap body 136, between a first cap side portion 137 and a second cap side portion 139, to help retain corresponding conductors. In particular, the teeth 192, 194 can be arranged in offset (or other) arrays so that a clamped conductor (or conductors) must be travel along a zig zag, undulating, or otherwise indirect path to be withdrawn past the teeth 192, 194 and out of the connector 130.

In different examples, different teeth geometries or arrays are possible. In the example illustrated, as noted above, the teeth 192 are offset from the teeth 194 via an offset alignment of the corresponding conductor supports 146, as secured to the base and cap plates 140, 150. Further, whereas the teeth 192, 194 angle away from the corresponding plate 140, 150 with a first angle A1, free ends of the teeth 192, 194 can sometimes extend at different angles (relative to the opposing plate 150, 140). Thus, for example, first surfaces of the teeth 192 may be non-parallel with second surfaces of the teeth 194 toward which the first surfaces face (and vice versa). Correspondingly, and as further discussed below relative to other examples, a mechanical funneling effect may further assist in preventing withdrawal of conductors from the connector 130.

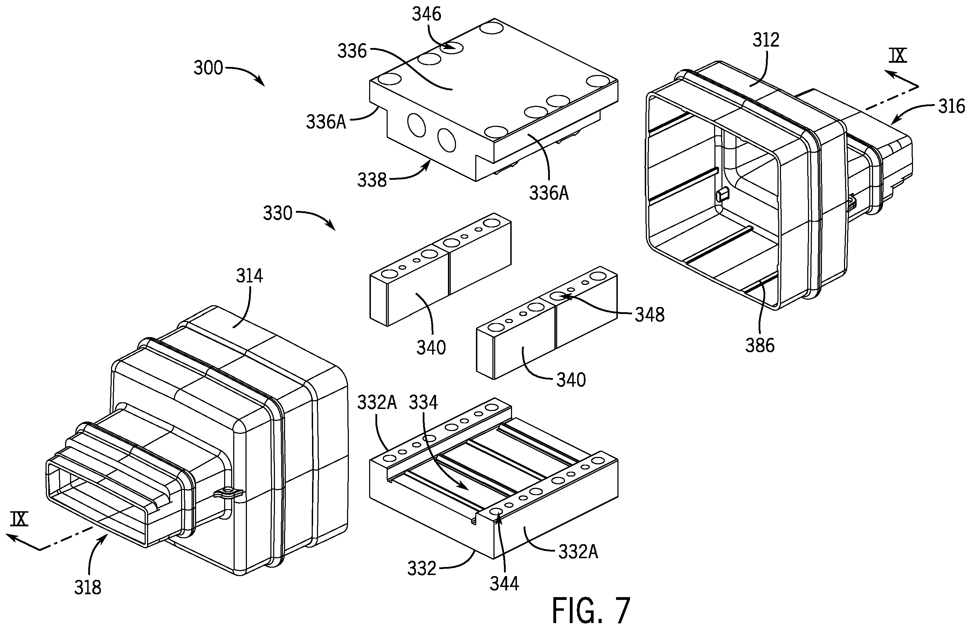

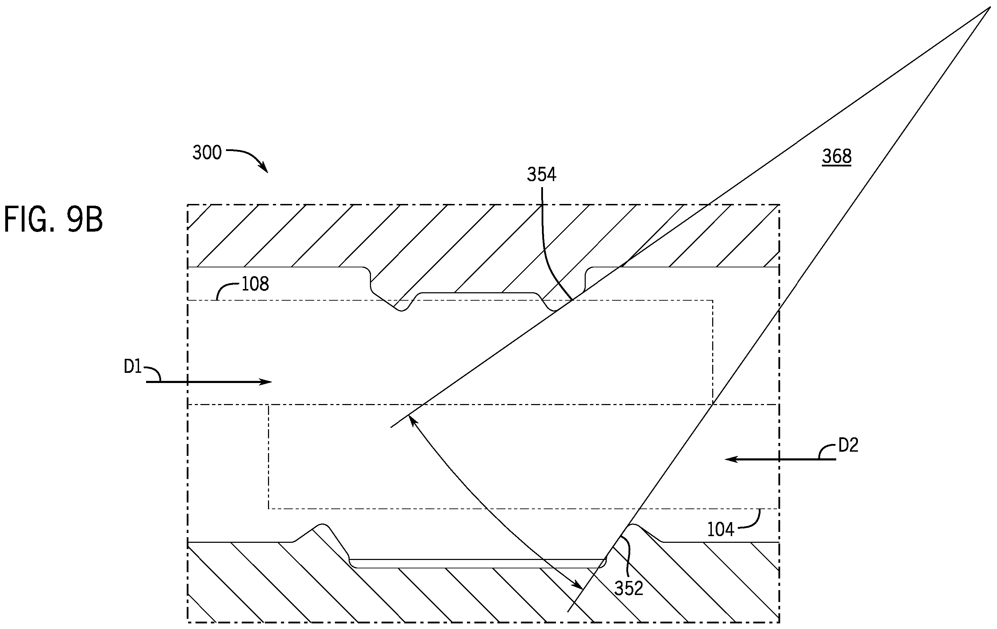

FIG. 7 provides an exploded view of another example connector assembly 300. The connector assembly 300 includes an insulating housing 310 (see also FIGS. 9A and 9B) formed from a first housing part 312 having a first entry 316 and a second housing part 314 having a second entry 318. The housing 310 can enclose a connector 330 for conductors that includes a base body 332 and a cap body 336. **In** particular, the base body 332 includes a first (recessed) clamp surface 334 and (protruding) side portions 332A, and the cap body 336 includes (recessed) side portions 336A, and a protruding central portion 336B that includes a second (protruding) clamp surface 338.

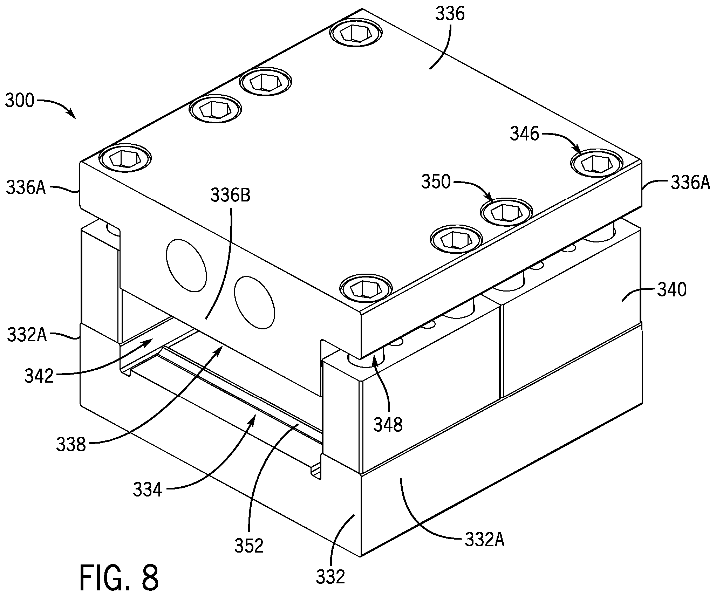

Referring also to FIG. 8, the side walls 340, the base body 332, and the cap body 336 can be secured together define a splice passage 342 (or, generally, a connector passage) to receive at least a first conductor (not shown in FIG. 8). Thus, the side walls 340 also help to define a perimetrically closed passage to help enclose and retain conductors. Further, as detailed below, the bodies 332, 336 can be moved closer together to clamp one or more conductors between the clamp surfaces 334, 338. In this regard, the connector 330 can also be considered to be a conductor support, and discussion above of the functionality of other conductor supports is thus similarly applicable to the connector 330 unless otherwise indicated.

During clamping (i.e., during compression of the clamp surfaces 334, 337 toward each other in a clamping direction), the protruding portion 336B of the cap body 336 can project past the side walls 340 along the clamping direction to protrude into (and thereby narrow) the splice passage 342 to clamp the relevant conductor(s) (see, e.g., the conductors 104, 108 in FIG. 9B). In other words, as assembled for service, the second clamp surface 338 can project past the side walls 340 along the clamping direction to overlap with the side walls 340 along the clamping direction and engage with one or more conductors. In combination with the side walls 340 extending between the base body 332 and the cap body 336, this arrangement can generally assist with alignment and security of retention during installation and during service (e.g., while clamping multiple conductors to provide an electrical splice or other connection) Further, this arrangement may be particularly advantageous with oblong or deformable (e.g., braided) conductors, as the side walls 340 can prevent excessive lateral displacement (or deformation) of the conductor that might otherwise reduce clamping efficacy.

With reference to FIG. 9A, for example, the first conductor (not shown) can be received in the insertion direction D1 through the first entry 316 and a second conductor (not shown) received in an opposing insertion direction D2 through the second entry 318. As shown, the first entry 316 and the second entry 318 are offset from each other transverse to the insertion direction D1 (or D2), as similarly discussed for the entries 116, 118 (see, e.g., FIG.1B). Accordingly, it may be possible to overlap the relevant conductors without interference (e.g., as shown for the conductors 104, 108 in FIG. 9B). Clamping force can then be applied to the base and cap bodies 332, 336 (e.g., as further detailed below) to securely clamp the conductors with appropriate mechanical and electrical (i.e., conductive) engagement.

As shown in FIG. 8, in a clamping configuration, the side walls 340 can be seated on the side portions 332A of the base body 332, but may remain spaced apart along the clamping direction from the side portions 336A of the cap body 336. Accordingly, as also discussed generally above and below, clamping force applied to the base and cap bodies 332, 336 may be transmitted effectively to the conductor(s) to be secured, rather than simply compressing the side walls 340 between the base and cap bodies 332, 336.

In particular for the illustrated example, the base body 332 includes first openings 344 (see FIG. 7), the cap body 336 includes second openings 346, and the side walls 340 includes a third openings 348. With the bodies 332, 336 and the side walls 340 aligned for service, the openings 344, 346, 348 collectively define fastener passages 350 that can be used to secure the base body 332 to the cap body 336 and clamp conductors therebetween. In some examples, fasteners that secure and clamp the base and cap bodies 332, 336 may extend within the fastener passages 350, internal to the side walls 340, and between the base body 332 and the cap body 336 - as well as generally along the side walls 340. In some examples, the base body 332 or the cap body 336 can include threaded bores that receive the fasteners 186 to secure the base body 332 to the cap body 336.

Referring now to FIGS. 9A and 9B, the base body 332 includes a first array of teeth 352 that protrude toward the cap body 336 (e.g., in a clamping direction along axis 387). Similarly, the cap body 336 includes a second array of teeth 354 that protrude toward the base body 332 (e.g., in a clamping direction, oppositely to the teeth 352).

As similarly discussed above, the teeth 352 can be offset from the teeth 354 along the insertion direction D1 to help retain clamped conductors. In the illustrated example, the teeth 352, 354 are offset from each other via the location of their respective integral formation on the corresponding body 332, 336, although other approaches are possible (e.g., with the teeth 352, 354 otherwise connected to the bodies 332, 336).

Also as similarly discussed above, funneling geometry can be provided by adjacent sets of the teeth 352, 354 (relative to the insertion direction(s) of corresponding conductors). For example, a first protruding surface 360 of a tooth of the teeth 352 can face toward a second protruding surface 362 of an adjacent tooth of the teeth 354 (i.e., a next one of the teeth 354 relative to the insertion directions D1 or D2). As generally discussed above, the first and second protruding surfaces 360, 362 can be nonparallel with each other. For example, an angle defined by the surface 360 relative to the insertion direction D1 can be different from an angle 368 defined relative to the insertion direction D1 by the surface 362. Thus, as similarly discussed above, adjacent teeth 352, 354 can provide a funneling effect with enhanced clamping force, particularly when also offset along the insertion direction D1, as also discussed noted above.

In some examples, in order to secure the first and second housing parts 312, 314, an adhesive tape 380 (e.g., electrical tape) can be applied between an overlapping region 382 of the first and second housing parts 312, 314. In the illustrated example, the adhesive tape 380 is applied between protruding (e.g., circumferential) ribs 384. As shown in FIG. 9A, similar ribs 384 can also be provided to secure tape at entries to the housing parts 312, 314. Thus, for example, seams of the assembly 300 can be readily sealed, as also discussed above. In some examples, the first and second housing parts 312, 314 may include internal ribs 386 that can help to provide alignment of the connector 330, as disposed within the insulating housing 310.

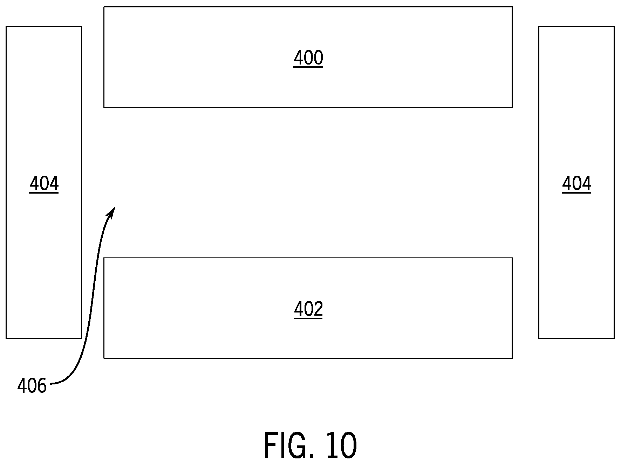

In other examples, a base body, a cap body, and side walls can be differently arranged. For example, as shown in FIG. 10, a cap body 400 and a base body 402 can be arranged laterally between side walls 404. In this arrangement, and in others, the base body 402 and cap body 400 and the side walls 404 can still collectively define a splice passage 406 to receive and secure one or more conductors.

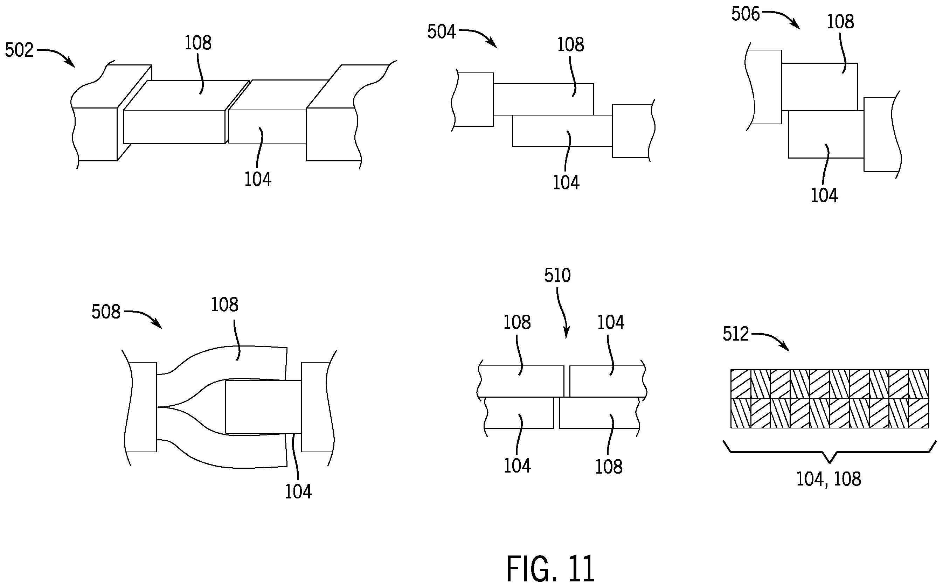

Although particular overlapping configurations for conductors are discussed above, a variety of other configurations are possible. For example, as illustrated in FIG. 11, conductors can be secured in some examples in an end-to-end configuration, in a vertically stacked configuration, in a laterally side-to-side configuration, with one conductor receiving (e.g., sandwiching or surrounding) another, or in various vertically or laterally stacked arrays.

In particular, a conductor array 502 in FIG. 11 includes an end-to-end configuration of the conductors 104, 108, with free ends of the conductors 104, 108 abutted together (although non-abutting arrangements are also possible). A conductor array 504 includes a vertically stacked configuration of the conductors 104, 108, with the conductor 108 clamped onto the top of the conductor 104. A conductor array 506 includes a side-by-side configuration of the conductor 104, 108, with each of the conductors 104, 108 extending along a corresponding lateral sides of the other. A conductor array 508 includes the conductor 108 sandwiching the conductor 104, with the conductor 108 being split to contact opposing sides of the conductor 104. In other similar arrangements, multiple conductors (e.g., two of the conductors 108) can similarly engage opposing sides of the conductor 104. Also shown in FIG. 11, conductor arrays 510, 512 can include, respectively, a vertical stacking of multiple of the conductors 104, 108 (e.g., with instances of each of the conductors 104, 108 being vertically supported by contact with a top surface of another of the conductors 104, 108) and a laterally stacking of multiple of the conductors 104, 108 (e.g., with alternating conductors arrayed laterally and aligned to abut end-to-end). These and other arrays of conductors can be variously used in the examples illustrated in the preceding figures (e.g., connector assemblies 100 or 300).

Thus, examples of the disclosed technology can provide improved connection assemblies to electrically and mechanically connect conductors together. In some examples, as further detailed above, a wide range of clamping heights and a high degree of clamping forces can be readily obtained.

It is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Unless otherwise specifically indicated, ordinal numbers are used herein for convenience of reference, based generally on the order in which particular components are presented in the relevant part of the disclosure. In this regard, for example, designations such as "first," "second," etc., generally indicate only the order in which a thus-labeled component is introduced for discussion and generally do not indicate or require a particular spatial, functional, temporal, or structural primacy or order.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

Also as used herein, unless otherwise limited or defined, "integral" and derivatives thereof (e.g., "integrally") describe elements that are manufactured as a single piece without fasteners, adhesive, or the like to secure separate components together. For example, an element stamped or cast as a single-piece component from a single piece of sheet metal or a single mold (etc.), without rivets, screws, or adhesive to hold separately formed pieces together, is an integral (and integrally formed) element. In contrast, an element formed from multiple pieces that are separately formed initially, then later connected together, is not an integral (or integrally formed) element.

Also as used herein, unless otherwise limited or specified, "substantially identical" refers to two or more components or systems that are manufactured according to the same process and specification, with variation between the components or systems that are within the limitations of acceptable tolerances for the relevant process or specification. For example, two components can be considered to be substantially identical if the components are manufactured according to the same standardized manufacturing steps, with the same materials, and within the same acceptable dimensional tolerances (e.g., as specified for a particular process or product).

**In** some implementations, devices or systems disclosed herein can be utilized, manufactured, installed, etc. using methods embodying aspects of the disclosed technology. Correspondingly, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, should be understood to disclose, as examples of the disclosed technology, the utilized features and implemented capabilities of such device or system.

Some methods of the disclosed technology may be presented above or below with operations listed in a particular order. Unless otherwise required or specified, the operations of such methods can be implemented in different orders, in parallel, or as selected sub-sets of one or more individual operations (e.g., with a particular listed operation being implemented alone, rather than in combination with others).

Features which are described in the context of separate embodiments may also be provided in combination in a single embodiment, or used together and/or be interchangeable wherever possible. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the connector assembly described may be incorporated into/used in corresponding methods and vice versa.

The previous description of the disclosed examples is provided to enable any person skilled in the art to make or use the disclosed technology. Various modifications to these examples will be readily apparent to those skilled in the art, and the generic principles defined herein may be applied to other examples without departing from the spirit or scope of the disclosed technology. Thus, the disclosed technology is not intended to be limited to the examples shown herein but is to be accorded the widest scope consistent with the principles and novel features disclosed herein.

## Claims

1. A connector assembly (300) for conductors (104, 108), the connector assembly comprising (300):
a base body (332) that includes a first clamp surface (334);
a cap body (336) that includes a second clamp surface (338); and
side walls (340) extending between the base body and the cap body;
the side walls, the base body, and the cap body defining a connector passage (342) to receive a first conductor (104) and a second conductor (108) within the connector passage; and
fasteners (186) extending along the side walls to clamp the first and second conductors within the connector passage between the base body and the cap body, the fasteners securing the base body to the cap body and securing the side walls between the base body and the cap body.

2. The connector assembly of claim 1, wherein the side walls (340) define fastener passages (350) and the fasteners (186) extend within the fastener passages, internal to the side walls, between the base body (332) and the cap body (336).

3. The connector assembly of claim 2, wherein the base body (332) or the cap body (336) includes threaded bores that receive the fasteners (186) to secure the base body to the cap body.

4. The connector assembly of any of the preceding claims, wherein the cap body (332) includes a protruding portion (336B) that projects past the side walls (340) into the connector passage (350) to clamp the first and second conductors (104, 108).

5. The connector assembly of any of the preceding claims, further comprising an insulating housing (310) that includes:
a first housing part (312) that includes a first entry (316) for the first conductor (104); and a second housing part (314) that includes a second entry (318) for the second conductor (108) and is securable to the first housing part so that the first and second housing parts fully enclose the base body (332), the cap body (336), and the side walls (340), except at the first and second entries.

6. The connector assembly of claim 5, wherein a first end of the first housing part (312) opposite the first entry (316) is nested within a second end of the second housing part (314) opposite the second entry (318).

7. The connector assembly of claim 6, wherein one or more of the first housing part (312) or the second housing part (314) includes an exterior circumferential rib (113) adjacent to, respectively, the first end or the second end.

8. The connector assembly of any of claims 5 through 7, wherein the connector passage (350) defines an insertion direction (D1); and
wherein the first entry (316) and the second entry (318) are offset from each other, transverse to the insertion direction.

9. The connector assembly of any of the preceding claims, wherein the base body (332) includes a first array of teeth (352) that protrude toward the cap body (336); and
wherein the cap body includes a second array of teeth (354) that protrude toward the base body.

10. The connector assembly of claim 9, wherein the first array of teeth (352) are integrally formed with the base body (332) and the second array of teeth (354) are integrally formed with the cap body (336).

11. The connector assembly of either of claims 9 or 10, wherein a first tooth of the first array (352) is adjacent to a second tooth of the second array (356) relative to an insertion direction (D1) of the first conductor (104) into the connector passage (350);
wherein a first protruding surface (360) of the first tooth is configured to engage a first side of the first conductor and faces toward the second tooth, and a second protruding surface (362) of the second tooth is configured to engage a second side of the second conductor (108) and faces toward the first tooth; and
wherein the first protruding surface is not parallel to the second protruding surface.

12. A method of connecting conductors, the method comprising:
providing a connector assembly (300) that includes: a base body (332) that includes a first clamp surface (334), a cap body (336) that includes a second clamp surface (338), and side walls (340) extending between the base body and the cap body.
inserting a first conductor (104) and a second conductor (108) into a connector passage (350) defined by the side walls, the base body, and the cap body to secure the first and second conductors within the connector passage (350); and
securing fasteners (186) that extend along the side walls to clamp the first and second conductors within the connector passage between the base body and the cap body, with the fasteners securing the base body to the cap body and securing the side walls between the base body and the cap body.

13. The method of claim 12, wherein the base body (332) includes a first base side portion (157) and a second base side portion (159), with the first clamp surface (334) extending between the first and second base side portions;
wherein the cap body (336) includes a first cap side portion (137) and a second cap side portion (139), with the second clamp surface (338) extending between the first and second cap side portions; and
wherein securing the side walls (340) between the base body includes securing a first side wall of the side walls to be seated on the first base side portion and securing a second side wall of the side walls (340) to be seated on the second base side portion.

14. The method of claim 13, wherein the first and second conductors (104, 108) are clamped within the connector passage (342) with the first side wall spaced apart from the first cap side portion (137) along a clamping direction (387) defined by the fasteners (186), and with the second side wall spaced apart from the second cap side portion (139) along the clamping direction (387).

15. The method of any of claims 12 through 14, wherein the first and second conductors (104, 108) are clamped with a first protruding surface (360) of a first tooth on the first clamp surface (334) and a second protruding surface (362) of a second tooth on the second clamp surface (338) that is adjacent to the first tooth along an insertion direction (D1) of the connector passage (342); and
wherein the first and second protruding surfaces face each other and are non-parallel with each other.
